(19)

Europäisches Patentamt
European Patent Office
Office européen des brevets

(11) **EP 1 746 120 A1**

(12) **EUROPEAN PATENT APPLICATION**
published in accordance with Art. 158(3) EPC

(43) Date of publication:
**24.01.2007 Bulletin 2007/04**

(51) Int Cl.:
*C08G 63/18* (2006.01)     *C08G 63/78* (2006.01)

(21) Application number: **05739306.8**

(22) Date of filing: **11.05.2005**

(86) International application number:
**PCT/JP2005/008631**

(87) International publication number:
**WO 2005/108461 (17.11.2005 Gazette 2005/46)**

(84) Designated Contracting States:
**DE**

(30) Priority: **11.05.2004  JP 2004140759
18.06.2004  JP 2004181683**

(71) Applicant: **MITSUBISHI CHEMICAL CORPORATION
Tokyo 108-0014 (JP)**

(72) Inventors:
• **AKITA, Minako,
c/o Mitsubishi Chemical Group Inc.
Yokkaichi-shi, Mie 5100848 (JP)**

• **KASAI, Atsushi,
c/o Mitsubishi Chemical Group Inc.
Yokkaichi-shi, Mie 5100848 (JP)**
• **TANAKA, T.,
c/o Mitsubishi Chemical Group Inc.
Yokkaichi-shi, Mie 5100848 (JP)**

(74) Representative: **TER MEER - STEINMEISTER & PARTNER GbR
Patentanwälte,
Mauerkircherstrasse 45
81679 München (DE)**

(54) **POLYESTER RESIN AND PROCESS FOR PRODUCTION THEREOF**

(57)     To provide a polyester resin having 1,4-CHDA as the main dicarboxylic acid units, having isomerization of trans-1,4-CHDA suppressed in the esterification and polyconsensation reactions and having a high melting point and excellent heat resistance, and a process for its production.

A polyester resin obtainable by preparing an oligomer by an esterification reaction of a dicarboxylic acid component containing 1,4-cyclohexane dicarboxylic acid as the main component, with a diol component, and polycondensing this oligomer in the presence of a polycondensation catalyst; and a process for producing a polyester resin **characterized in that** the esterification reaction is carried out by means of a basic compound, and then, the polycondensation reaction is carried out by means of a polycondensation catalyst. In the resent invention, T0 and Tp satisfy $0 \leqq \{(T0-Tp)/T0\} \times 100 \leqq 12$ where T0 is the mol% of the trans form in the 1,4-cyclohexane dicarboxylic acid contained in the starting material, and Tp is the mol% of the trans form in the 1,4-cyclohexane dicarboxylic acid units contained in the obtainable polyester resin.

EP 1 746 120 A1

## Description

TECHNICAL FIELD

The present invention relates to a polyester resin and a process for its production. More particularly, it relates to a polyester resin excellent in heat resistance and also excellent in hydrolysis resistance, and a process for its production.

BACKGROUND ART

Among polyester resins, a polyester resin containing units of 1,4-cyclohexane dicarboxylic acid (hereinafter sometimes referred to simply as 1,4-CHDA) as the main dicarboxylic acid units, is excellent in transparency, hydrolysis resistance (hardly hydrolyzable nature), weather resistance, etc., and its application is being expanded. The polyester resin containing 1,4-CHDA units as the main dicarboxylic acid units is obtainable by polycondensing in the presence of a polycondensation catalyst an esterification reaction product (oligomer) obtainable via an esterification reaction or an ester exchange reaction of 1,4-CHDA or an ester-forming derivative of 1,4-CHDA, with a diol component. The method for preparing the oligomer may be (1) a direct esterification reaction using a dicarboxylic acid component and a diol component as the starting materials, or (2) an ester exchange method of an ester-forming derivative component of a dicarboxylic acid with a diol component. The ester exchange method of (2) has a drawback that the polyester resin thereby obtainable is poor in the hydrolysis resistance, and also has a drawback that the cost for the ester-forming derivative of 1,4-CHDA is higher than 1,4-CHDA.

On the other hand, 1,4-CHDA usually has isomers of trans form and cis form, and during the esterification reaction and during the polycondensation reaction, the trans form is likely to be isomerized to the cis form. If the mol% of the cis form in the 1,4-CHDA units contained in the polyester resin increases, there will be a problem that a polyester resin having a high melting point tends to be hardly obtainable, and the heat resistance tends to be poor. JP-A-2000-290356 discloses a technique for producing an alicyclic polyester using as a starting material 1,4-CHDA containing 100 mol% of the trans form. However, there is no disclosure or suggestion about the relation between the heat resistance and the proportion of the cis form contained in the 1,4-CHDA units in the obtainable polyester resin, the isomerization of the trans form to the cis form during the polycondensation reaction, or a method for preventing such isomerization.

Further, U.S. Patent 2,901,466 discloses an example for producing an alicyclic polyester wherein 100% trans form 1,4-dimethylcyclohexane dicarboxylate and 100% trans form 1,4-cyclohexane dimethanol (hereinafter, cyclohexane dimethanol may simply be referred to as "CHDM") are used as the starting materials. However, for the preparation of such 100% trans form CHDA and CHDM, an extremely cumbersome and difficult purification operation is usually required. Further, there is no disclosure or suggestion about prevention of the isomerization of the trans form.

Further, U.S. Patent Application Publication No. 2003-232958 proposes a technique for producing an alicyclic polyester using 1,4-CHDA as the starting material. However, there is no suggestion about the relation between the proportion of the cis form contained in 1,4-CHDA and the physical properties of the polyester resin, the isomerization of the trans form to the cis form during the polycondensation reaction, or a method for preventing such isomerization.

Still further, U.S. Patent 6,084,055 discloses an example for producing an alicyclic polyester using 1,4-dimethylcyclohexane carboxylate and 1,4-cyclohexane dimethanol (hereinafter sometimes referred to simply as 1,4-CHDM) as the starting materials. However, there is no suggestion about the isomerization of the trans form to the cis form during the polycondensation reaction.

DISCLOSURE OF THE INVENTION

OBJECTS TO BE ACCOMPLISHED BY THE PRESENT INVENTION

Under the above-mentioned circumstances, the present inventors have conducted an extensive study for the purpose of providing a polyester resin and a process for its production, whereby various drawbacks present in the technical field to which the present invention belongs can be all overcome, and as a result, have accomplished the present invention. Namely, the objects of the present invention are as follows.

1. To provide a polyester resin having 1,4-CHDA units as the main carboxylic acid units, having isomerization of trans-1,4-CHDA suppressed in the esterification and polycondensation reactions and having a high melting point and excellent heat resistance.
2. To provide a process for producing a polyester resin wherein isomerization of starting material 1,4-CHDA from the trans form to the cis form is suppressed in the polycondensation reaction process.

MEANS TO ACCOMPLISH THE OBJECTS

The present inventors have conducted a study to solve the above problems and has arrived at the present invention. Namely, the present invention provides the following.

1. A process for producing a polyester resin, which comprises an esterification reaction of a dicarboxylic acid component containing 1,4-cyclohexane dicarboxylic acid as the main component, with a diol component, and a polycondensation reaction, wherein the esterification reaction is carried out by means of a basic compound, and then, the polycondensation reaction is carried out by means of a polycondensation catalyst.
2. A polyester resin which is a polyester resin obtainable by preparing an oligomer by an esterification reaction of a dicarboxylic acid component containing 1,4-cyclohexane dicarboxylic acid as the main component, with a diol component, and polycondensing this oligomer in the presence of a polycondensation catalyst, wherein T0 and Tp satisfy the following formula (I):

$$0 \leq \{(T0-Tp)/T0\} \times 100 \leq 12 \qquad (I)$$

where T0 is the mol% of the trans form in the 1,4-cyclohexane dicarboxylic acid contained in the starting material, and Tp is the mol% of the trans form in the 1,4-cyclohexane dicarboxylic acid units contained in the obtainable polyester resin.
3. A process for producing a polyester resin, which comprises a step of preparing an oligomer by an esterification reaction of a dicarboxylic acid component containing 1,4-cyclohexane dicarboxylic acid as the main component, with a diol component, and a step of polycondensing this oligomer in the presence of a polycondensation catalyst, wherein T0, T60 and Tp satisfy the following formula (II), and T0 and Tp of the obtainable polyester resin satisfy the following formula (I):

$$0 \leq \{(T0-Tp)/T0\} \times 100 \leq 12 \qquad (I)$$

$$0 \leq \{(T0-T60)/T0\} \times 100 \leq 5 \qquad (II)$$

where T0 is the mol% of the trans form in the 1,4-cyclohexane dicarboxylic acid contained in the starting material, Tp is the mol% of the trans form in the 1,4-cyclohexane dicarboxylic acid units contained in the obtainable polyester, and T60 is the mol% of the trans form in the 1,4-cyclohexane dicarboxylic acid units at an esterification rate of 60%.

EFFECTS OF THE INVENTION

The present invention provides the following advantageous effects and its industrial value is very high.

1. According to the present invention, a polyester resin is provided which contains 1,4-CHDA units as the main dicarboxylic acid units and which has a high melting point and excellent heat resistance.
2. According to the present invention, isomerization from trans 1,4-CHDA to cis 1,4-CHDA is suppressed in the polycondensation reaction process, and a polyester resin having a high content of trans 1,4-CHDA units can be obtained.
3. The process for producing a polyester resin of the present invention is industrially advantageous as compared with an ester exchange method employing an ester-forming derivative, since it relies on a direct esterification method of 1,4-CHDA.

BEST MODE FOR CARRYING OUT THE INVENTION

Now, the present invention will be described in detail with reference to typical embodiments, but it should be understood that the present invention is by no means thereby restricted.
The polyester resin of the present invention is a polyester resin obtainable by preparing an oligomer by an esterification reaction of a dicarboxylic acid component containing 1,4-cyclohexane dicarboxylic acid (1,4-CHDA) as the main component with a diol component, and polycondensing this oligomer in the presence of a polycondensation catalyst. Here, "as the main component" means that the main component of the dicarboxylic acid component is 1,4-CHDA. Specifically, the proportion of 1,4-CHDA in the total carboxylic acid component is at least 80 mol%, and the rest is a dicarboxylic acid other than 1,4-CHDA. If the proportion of 1,4-CHDA in the total dicarboxylic acid component is less than 80 mol%, the heat resistance of the obtainable polyester resin may sometimes be inadequate, such being undesirable. The proportion of 1,4-CHDA in the total dicarboxylic acid component is preferably at least 90 mol%, more preferably at least 95 mol%. 1,4-CHDA usually has isomers of trans form and cis form, and the ratio of the trans form/the cis form is selected so that the proportion of the trans form is large. The molar ratio of the trans form/the cis form is preferably at least 80/20, more preferably at least 85/15, particularly preferably at least 90/10.

The dicarboxylic acid component to be used for the production of the polyester resin of the present invention contains the above 1,4-CHDA as the main component, but, as mentioned above, may further contain as a copolymerizable component a dicarboxylic acid other than 1,4-CHDA. Such a copolymerizable component includes, for example, an aromatic dicarboxylic acid such as terephthalic acid, phthalic acid, isophthalic acid, 1,4-phenylenedioxy dicarboxylic acid, 1,3-phenylenedioxy diacetic acid, 4,4'-diphenylene dicarboxylic acid, 4,4'-diphenyl ether dicarboxylic acid, 4,4'-diphenyl ketone dicarboxylic acid, 4,4'-diphenoxyethane dicarboxylic acid, 4,4'-diphenylsulfone dicarboxylic acid or 2,6-naphthalene dicarboxylic acid, an alicyclic dicarboxylic acid such as hexahydroterephthalic acid or hexahydroisophthalic acid, and an aliphatic dicarboxylic acid such as succinic acid, glutaric acid, adipic acid, pimelic acid, suberic acid, azelaic acid, sebacic acid, undecadicarboxylic acid or dodecadicarboxylic acid. These copolymerizable components may be used alone or in combination as a mixture of two or more of them. Among them, terephthalic acid, isophthalic acid or 2,6-naphthalene dicarboxylic acid is preferably used. The ester-forming derivative of a dicarboxylic acid may, for example, be a $C_{1-4}$ aliphatic alcohol diester of the above dicarboxylic acid, and among them, a dimethyl ester is preferably employed.

In the process of the present invention, the diol to be used for the esterification reaction preferably contains 1,4-CHDM. 1,4-CHDM in the diol is preferably at least 60 mol%, and if it is less than 60 mol%, the polymerizability tends to be poor.

Further, 1,4-CHDM is usually a mixture of the trans form and the cis form from the viewpoint of availability. However, depending upon the particular application, the trans/cis ratio is preferably selected usually from 100/0 to 60/40, depending upon the desired heat resistance, etc. If the trans/cis ratio is lower than 60/40, the heat resistance of the obtainable polyester resin tends to be poor.

The diol component to be used for the production of the polyester resin of the present invention is not particularly limited so long as it is one capable of being directly esterified with the above-mentioned dicarboxylic acid component. It is preferably one containing 1,4-cyclohexane dimethanol (1,4-CHDM). The proportion of 1,4-CHDM is preferably at least 30 mol% based on the total diol component. If the proportion of 1,4-CHDM is less than 30 mol%, the strength of the obtainable polyester resin tends to be low, such being undesirable. The proportion of 1,4-CHDM is more preferably at least 50 mol%, particularly preferably at least 70 mol%. Further, 1,4-CHDM has isomers and is usually a mixture of the trans form and the cis form. The ratio of the isomers is such that by the weight ratio, the ratio of the trans form/the cis form is from 60/40 to 100/0. If the trans form is less than 60%, the esterification reactivity tends to be low, such being undesirable.

The diol component to be used for the production of the polyester resin contains 1,4-CHDM as mentioned above, but it may further contain as a copolymerizable component a diol component other than 1,4-CHDM. A useful copolymerizable component includes, for example, an aliphatic diol such as ethylene glycol, trimethylene glycol, tetramethylene glycol, pentamethylene glycol, hexamethylene glycol, octamethylene glycol, decamethylene glycol, neopentyl glycol, diethylene glycol, polyethylene glycol or polytetramethylene ether glycol, an alicyclic diol such as 1,2-cyclohexanediol, 1,4-cyclohexanediol or 1,1-cyclohexanedimethylol, and an aromatic diol such as xylylene glycol, 4,4'-dihydroxybiphenyl, 2,2-bis(4'-hydroxyphenyl)propane, 2,2-bis(4'-β-hydroxyethoxyphenyl)propane, bis(4-hydroxyphenyl)sulfone or bis(4-β-hydroxyethoxyphenyl)sulfonic acid. These copolymerizable components may be used alone or in combination as a mixture of two or more of them.

At the time of producing the polyester resin, in addition to the dicarboxylic acid component and the diol component, other copolymerizable component may further be used within a range not to impair the purpose or effects of the present invention. Such other copolymerizable component may, for example, be a hydroxycarboxylic acid such as glycolic acid, p-hydroxybenzoic acid or p-β-hydroxyethoxybenzoic acid, a monofunctional component such as an alkoxycarboxylic acid, stearyl alcohol, benzyl alcohol, stearic acid, behenic acid, benzoic acid, t-butylbenzoic acid or benzoyl benzoic acid, or a tri- or higher polyfunctional component such as tricarballylic acid, trimellitic acid, trimesic acid, pyromellitic acid, naphthalene tetracarboxylic acid, gallic acid, trimethylolethane, trimethylolpropane, glycerol, pentaerythritol or sugar ester.

The polyester resin of the present invention can be produced by the following process. Namely, the dicarboxylic acid component containing 1,4-CHDA as the main component, the diol component, and, as the case requires, other copolymerizable component, are subjected to an esterification reaction continuously or in a batch system, in the presence or absence of a polycondensation catalyst, to prepare an oligomer. This esterification reaction is carried out by charging the above starting material components into an esterification reaction tank equipped with a stirrer and a reflux condenser, adding a catalyst, a basic compound and other additives, as the case requires, and carrying out the reaction in an inert gas atmosphere with stirring while water formed by the reaction is distilled off. After completion of the esterification reaction, the reaction mixture is subjected to a polycondensation reaction continuously or in a batch system in an inert gas atmosphere with stirring while the temperature and pressure are adjusted by adding a polymerization catalyst, a basic compound and other additives in the same reaction tank or after transferring the reaction mixture from the esterification reaction tank to a polycondensation reaction tank.

The polycondensation catalyst to be used may, for example, be a metal compound containing at least one metal element. The polycondensation catalyst may be used also in the esterification reaction. The metal element may, for example, be titanium, germanium, antimony, aluminum, nickel, zinc, tin, cobalt, rhodium, iridium, zirconium, hafnium, lithium, calcium or magnesium. As a preferred metal, titanium, germanium, antimony, aluminum or tin may, for example, be mentioned. Among them, a titanium compound is particularly preferred, since it provides high activities for both the esterification reaction and the polycondensation reaction.

Specific examples of the titanium compound suitable as the polycondensation catalyst include, for example, tetra-n-propyl titanate, tetraisopropyl titanate, tetra-n-butyl titanate, tetraisobutyl titanate, tetra-tert-butyl titanate, tetracyclohexyl titanate, tetraphenyl titanate, tetrabenzyl titanate, lithium oxalate titanate, potassium oxalate titanate, ammonium oxalate titanate, titanium oxide, an ortho ester or condensed ortho ester or titanium, a reaction product of an ortho ester or condensed ortho ester of titanium with a hydroxycarboxylic acid, a reaction product of an ortho ester or condensed ortho ester of titanium with a hydroxycarboxylic acid and a phosphorus compound, and a reaction product of an ortho ester or condensed ortho ester of titanium with a polyhydric alcohol having at least two hydroxyl groups, a 2-hydroxycarboxylic acid or a base.

Examples of the antimony compound include, for example, antimony trioxide, antimony pentoxide, antimony acetate and antimony glycoxide. Examples of the germanium compound include, for example, germanium dioxide, germanium tetraoxide, germanium hydroxide, germanium oxalate, germanium tetraethoxide and germanium tetra-n-butoxide.

The aluminum compound may, for example, be a carboxylate such as aluminum formate, aluminum acetate, basic aluminum acetate, aluminum propionate, aluminum oxalate, aluminum acrylate, aluminum laurate, aluminum stearate, aluminum benzoate, aluminum trichloroacetate, aluminum lactate, aluminum tartarate, aluminum citrate or aluminum salicylate, an inorganic acid salt such as aluminum chloride, aluminum hydroxide, aluminum hydroxide chloride, aluminum carbonate, aluminum phosphate, or aluminum phosphonate, an aluminum alkoxide such as aluminum methoxide, aluminum ethoxide, aluminum n-propoxide, aluminum isopropoxide, aluminum n-butoxide or aluminum tert-butoxide, an aluminum chelate compound such as aluminum acetylacetonate, aluminum acetylacetate, aluminum ethylacetoacetate or aluminum ethylacetoacetate diisopropoxide, an organic aluminum compound such as trimethyl aluminum or triethyl aluminum, or a partial hydrolysate thereof, or aluminum oxide.

Among these aluminum compounds, the carboxylate, the inorganic acid salt or the chelate compound is preferred, and among them, basic aluminum acetate, aluminum lactate, aluminum chloride, aluminum hydroxide, aluminum hydroxide chloride or aluminum acetylacetonate is particularly preferred. As the basic aluminum acetate, one stabilized with an additive such as boric acid may also be employed.

These catalysts may be used alone or in combination. The amount of the catalyst to be used for such an esterification reaction or polycondensation reaction is usually an amount of preferably at least 5 ppm and at most 1,000 ppm, particularly preferably at least 10 ppm and at most 500 ppm, as calculated as metal atoms, based on the polyester to be formed, in the single use system or the combined use system.

In the process for producing a polyester resin of the present invention, it is preferred to add a basic compound at the time of the esterification reaction, preferably to the esterification reaction mixture, since it is effective to suppress isomerization of the trans 1,4-CHDA to the cis form. Here, in the present invention, "the reaction mixture" includes not only the mixture during the reaction but also the mixture of starting materials before initiation of the reaction. Examples of the basic compound include a compound containing an alkali metal, a compound containing an alkaline earth metal, an organic amine and an organic ammonium compound. The alkali metal in the compound containing an alkali metal may, for example, be lithium, sodium, potassium, rubidium or cesium. The alkaline earth metal in the compound containing an alkaline earth metal may, for example, be beryllium, magnesium, calcium, strontium or barium.

A compound containing such a metal may, for example, be a salt of such a metal with a saturated aliphatic carboxylic acid such as formic acid, acetic acid, propionic acid, butyric acid or oxalic acid, its salt with an unsaturated aliphatic carboxylic acid such as acrylic acid or methacrylic acid, its salt with an aromatic carboxylic acid such as benzoic acid, its salt with a hydroxycarboxylic acid such as lactic acid, citric acid or salicylic acid, its salt with an inorganic acid such as carbonic acid, phosphonic acid or hydrogencarbonate, its alkoxide such as methoxide, ethoxide, n-propoxide, iso-propoxide, n-butoxide or tert-butoxide, its chelate compound such as its acetylacetonate, its oxide, or its hydroxide. Further, a strongly basic hydroxide or the like is likely to undergo a hydrolytic reaction during the polycondensation reaction, and its salt with a weak acid is preferably employed. Among them, an alkali metal carboxylate or an alkaline earth metal carboxylate is preferably employed. Particularly preferably employed is an acetate of such a metal or its hydrate.

The organic amine compound may, for example, be triethylamine, ammonia, morpholine or piperidine. Further, the organic ammonium compound may, for example, be ammonium, triemthylammonium or tetramethylammonium. Among them, a tetraalkylammonium hydroxide compound such as tetramethylammonium hydroxide, tetraethylammonium hydroxide, tetrapropylammonium hydroxide or tetrabutylammonium hydroxide, a tetraalkylammonium acetate compound such as tetramethylammonium acetate, tetraethylammonium acetate or tetrapropylammonium acetate, a chloride such as tetramethylammonium chloride, tetraethylammonium chloride or tetrabutylammonium chloride, or a quaternary ammonium salt such as a halogenated tetraalkylammonium compound, is preferred. Particularly, a tetraalkylammonium hydroxide compound which is volatile and hardly decomposable during the esterification reaction or polycondensation reaction and which will not remain in the polyester resin after the polycondensation reaction, is preferred. These basic compounds may be used alone or in combination as a mixture of two or more of them.

The ratio of the acid-base equivalent of the basic compound to the mol equivalent of the polycondensation catalyst to be used in the present invention (*alkali metal, alkaline earth metal:alkali metal, alkaline earth metal mol/valence/polymerization catalyst metal mol, organic amine, organic ammonium salt:organic amine, organic ammonium salt mol/polymerization catalyst metal mol) is preferably at least 0.1 and at most 10. Further, in a case where the basic compound is an alkali metal or alkaline earth metal carboxylate, such a molar ratio is preferably at least 0.1 and at most 1, more preferably at least 0.2 and at most 0.8.

In a case where the basic compound is an organic amine compound or an organic ammonium compound, such a molar ratio is preferably at least 1 and at most 10, more preferably such a molar ratio is at least 2 and at most 8. If such a molar ratio is less than 1, the effect to suppress isomerization from trans-1,4-CHDA to cis-1,4-CHDA tends to be low. On the other hand, if such a molar ratio exceeds 10, the polymerization activities tend to be low, and the thermal stability of the obtainable polyester resin tends to deteriorate.

Further, in the process for producing a polyester resin of the present invention, in addition to the above basic compound, a phosphorus compound for the purpose of improving the catalytic activities or controlling the molecular weight, or an anti-oxidizing agent for the purpose of improving the thermal stability, may be added to the reaction mixture. These compounds may be used alone or in combination as a mixture of two or more of them. The amount of the additives is not particularly limited, but it is usually selected within a range of from 100 to 5,000 ppm, based on the polyester resin to be formed.

The useful phosphorus compound is not particularly limited, and it may, for example, be phosphoric acid or a phosphate such as trimethyl phosphate, triethyl phosphate, phenyl phosphate or triphenyl phosphate, phosphorus acid or a phosphite such as trimethyl phosphite, triphenyl phosphite, tris(2,4-di-tert-butylphenyl)phosphite or tetrakis(2,4-di-tert-butylphenyl)phosphite, a phosphate compound such as dimethyl methylphosphate, diphenyl methylphosphonate, dimethyl phenylphosphonate, diethyl phenylphosphonate, diphenyl phenylphosphonate, dimethyl benzylphosphonate or diethyl benzylphosphonate, a phosphinic acid compound such as diphenylphosphinic acid, methyl diphenylphosphinate, phenyl diphenylphosphinate, phenylphosphinic acid, methyl phenylphosphinate or phenyl phenylphosphinate, a phosphine oxide compound such as diphenylphosphine oxide, methyldiphenylphosphine oxide, triphenylphosphine oxide or triphenylphosphopropionate, a phosphonous acid compound, a phosphinous acid compound, a phosphine compound, or a phosphonium betain compound.

As the antioxidation agent, a phenol compound may, for example, be preferred. The phenol compound is not particularly limited so long as it is a compound having a phenolic hydroxyl group. Specifically, it may, for example, be 2,6-di-tert-butyl-4-methylphenol, 2,6-di-tert-butyl-4-ethylphenol, pentaerythritol tetrakis[3-(3,5-di-tert-butyl-4-hydroxylphenyl)propionate, thiodiethylene bis[3-(3,5-di-tert-butyl-4-hydroxyphenyl) propionate, octadecyl-3-(3,5-di-tert-butyl-4-hydroxyphenyl)propionate, N,N'-hexane-1,6-diylbis[3-(3,5-di-tert-butyl-4-hydroxyphenyl)propionamide]], benzenepropanoic acid, 3,5-bis(1,1-dimethylethyl)-4-hydroxy, C7-C9 alkylester, 2,4-dimethyl-6-(1-methylpentadecyl)phenol, diethyl[[3,5-bis(1,1-dimethylethyl)-4-hydroxyphenyl]methyl] phosphonate, 3,3',3'',5,5',5''-hexa-tert-butyl a,a',a''-(mesitylene-2,4,6-tolyl)tri-p-cresol, calcium diethylbis[[[3,5-bis(1,1-dimethylethyl)-4-hydroxyphenyl]methyl] phosphonate], 4,6-bis(octylthiomethyl)-o-cresol, ethylenebis(oxyethylene)bis[3-(5-tert-butyl-4-hydroxy-m-tolyl) propionate], hexamethylenebis·[3-(3,5-di-tert-butyl-4-hydroxyphenyl) propionate, 1,3,5-tris(3,5-tert-butyl-4-hydroxybenzyl)-1,3,5-triazine-2,4,6 (1H,3H,5H)-trione, 1,3,5-tris[[(4-tert-butyl-3-hydroxy-2,6-xylyl)methyl]-1,3,5-triazine-2,4,6(1H,3H,5H)-trione, 2,6-di-tert-butyl-4-(4,6-bis(octylthio)-1,3,5-triazin-2-ylamino)phenol or 2',3-bis[[3-[3,5-di-tert-butyl-4-hydroxyphenyl]propionyl]]propionohydrazide.

These additives may be used alone or in combination. The amount of the additive to be used is not particularly limited, but it is usually at a level of from 100 to 5,000 ppm based on the polyester resin to be formed.

OTHER ADDITIVES

In the process for producing a polyester resin of the present invention, various additives may be incorporated as the case requires within a range not to impair the purpose or effects of the present invention. Such additives include, for example, an inorganic filler such as glass beads, glass powder, glass balloons, mica, talc or calcium carbonate, an antioxidant, a thermal stabilizer, an ultraviolet absorber, a neutralizing agent, a lubricant, a compatibilizing agent, an anti-fogging agent, an anti-blocking agent, a plasticizer such as paraffin oil, a fluororesin powder, a slipping agent, a dispersant, a coloring agent, an antiseptic agent and a fluorescent brightener.

PRODUCTION

The process for producing a polyester resin of the present invention is carried out in such a manner that the dicarboxylic acid component containing 1,4-CHDA as the main component and the diol component are subjected to an esterification reaction by means of the basic compound in the presence or absence of a catalyst, and then the polycondensation reaction is carried out by means of the polycondensation catalyst. Further, in this esterification reaction, water may be added in an amount of from about 5 to 60 wt% based on the diol at the time of charging the dicarboxylic acid and the diol, in order to facilitate the charging by reducing the viscosity of the slurry.

The amount of the polycondensation catalyst is usually such an amount that it will be at least 5 ppm and at most 1,000 ppm, preferably at least 10 ppm and at most 500 ppm, as calculated as metal atoms, based on the polyester to be formed. The timing for the addition of such a catalyst is not particularly limited, and it may be added from the beginning of the esterification reaction or may added during the polycondensation reaction. Otherwise, a part may be added at the time of the esterification reaction, and the rest may be added at the time of the polycondensation reaction.

The basic compound to be used in the process of the present invention may be employed as it is or may be employed in the form of an aqueous solution or other solution. Further, the basic compound is preferably added before the initiation of the esterification reaction. The basic compounds may be used along or in combination, but it is preferred to use an organic amine or organic ammonium compound in combination with an alkali metal salt or alkaline earth metal salt with a view to suppression of the isomerization.

The esterification reaction of the dicarboxylic acid and the diol is carried out by charging the dicarboxylic acid, the diol and the basic compound to an esterification reaction tank usually equipped with a stirrer and a distillation tube and, if necessary, adding a reaction catalyst, while water formed by the reaction is distilled off, with stirring in an inert atmosphere. The ratio of the diol component to the dicarboxylic acid compound is such that the diol component is used usually from 1 to 2 mol per mol of the dicarboxylic acid component. In a case where as a preferred diol component in the present invention, a diol component containing at least 80 mol% of 1,4-CHDM is used for the production of a polyester resin, the molar ratio of the diol component to 1 mol of the dicarboxylic acid component is preferably from 1 to 1.2, more preferably from 1 to 1.1, particularly preferably from 1 to 1.05.

With respect to the esterification reaction, the reaction pressure is usually at least 10 kPa and at most 200 kPa by absolute pressure; the reaction temperature is usually at least 150°C and at most 230°C, preferably at least 180°C and at most 220°C; and the reaction time is at least 10 minutes and at most 10 hours, preferably at least 30 minutes and at most 5 hours. By such an esterification reaction, a reaction product is obtained as a polyester precursor.

The polycondensation reaction is carried out usually at a temperature of at least the temperature upon completion of the esterification reaction and at most 280°C, preferably at most 260°C, usually for from 10 minutes to 10 hours, preferably from 30 minutes to 5 hours. If the temperature is too high, the polycondensation reaction tends to hardly proceed probably since heat decomposition takes place during the polymerization reaction. The pressure in the tank is from normal pressure to a final pressure of at most 1 kPa by absolute pressure, preferably at most 0.5 kPa.

After completion of the reaction, the obtained polyester is usually withdrawn in the form of a strand from the bottom of the tank and subjected to cutting under cooling with water, to obtain pellets. The reaction may be carried out by a batch method or a continuous method.

The time for the esterification reaction may vary depending upon the reaction temperature, the presence or absence of the catalyst, the type of the catalyst, the amount of the catalyst, the types and amounts of other compounds, but it is usually selected within a range of from 10 minutes to 10 hours, preferably from 30 minutes to 5 hours. To the reaction mixture, water may be added in an amount of from 5 to 60 parts by weight based on the diol component for the purpose of lowering the viscosity. The catalyst to be used for the esterification reaction may be of the same type as the polycondensation catalyst, and addition to the reaction mixture may be made by either (1) a method wherein a part is added before the esterification reaction and/or during the esterification reaction, and the rest is added at the time of transferring to the polycondensation step and/or during the polycondensation reaction, or (2) a method wherein the entire amount is added at the time of the transfer to the polycondensation step and/or during the polycondensation reaction.

By a study made by the present inventors, it has been found that if the initial temperature for the esterification reaction is made high, trans 1,4-CHDA is likely to be isomerized to the cis form, such being undesirable, although the esterification reaction rate may increase. Further, it has been found that it is preferred to adjust the esterification reaction temperature to at most 220°C after the esterification rate has exceeded 60%, whereby trans 1,4-CHDA tends to be scarcely isomerized to the cis form. The esterification reaction is preferably carried out under an absolute pressure of from 10 to 200 kPa while the temperature is gradually raised at a level of not higher than 220°C and to carry out the step until the esterification rate reaches 60%, within a temperature range with an upper limit of 185°C.

It is difficult to accurately define the temperature for the initiation of the esterification reaction. However, it is considered that, for example, in a case where the esterification reaction is carried out under normal pressure, the reaction has been initiated at a temperature of about 100°C, since water produced by a reaction at the time when the temperature has exceeded 100°C, starts to be distilled.

For the polycondensation reaction, the polycondensation catalyst and, if required, the basic compound and the above-mentioned other compounds, are added to the reactor after the esterification ratio in the esterification reaction has exceeded 60%, in such a manner that in a case where a part thereof is added to the reaction mixture in the esterification reaction step, the rest is added, and in a case where they are not added in the esterification reaction step, all of them is added to the polycondensation reaction mixture all at once or dividedly. The polycondensation reaction is preferably carried out within a temperature range of from 180°C to 250°C under reduced pressure. The time for the polycondensation reaction is selected within a range of from 10 minutes to 10 hours, preferably from 30 minutes to 5 hours, although it depends also on the temperature, the type of the catalyst, the amount of the catalyst and the types and amounts of other compounds. If the polycondensation reaction temperature is too high, the polycondensation reaction tends to hardly proceed probably due to the thermal decomposition during the reaction. The pressure of the reactor at the time of carrying out the polycondensation reaction is atmospheric pressure and is finally reduced usually to an absolute pressure of at most 1 kPa, preferably at most 0.5 kPa. After completion of the polycondensation reaction, the reaction product is withdrawn in the form of a strand from the bottom of the polycondensation reaction tank, and the strand is cooled with water and cut to obtain pellets of the polyester resin.

By a study by the present inventors, it has been found necessary in order to accomplish the object of the present invention effectively that T0, T60 and Tp satisfy the following formula (II) i.e. $0 \leqq \{(T0-T60)/T0\} \times 100 \leqq 5$, where T0 is the mol% of the trans form in the 1,4-CHDA as the starting material, Tp is the mol% of the transform in the 1,4-CHDA units in the obtainable polyester resin, and T60 is the mol% of the trans form in the 1,4-cyclohexane dicarboxylic acid units in the oligomer at an esterification rate of 60%, and the mol% of the trans form in the 1,4-cyclohexane dicarboxylic acid units in the obtained polyester resin satisfies the following formula (I) i.e. $0 \leqq \{(T0-Tp)/T0\} \times 100 \leqq 12$.

In the esterification reaction, if the value of T0 and T60 at the esterification rate of 60% does not satisfy (exceeds the upper limit of) the following formula (II) i.e. $0 \leqq \{(T0-T60)/T0\} \times 100 \leqq 5$, the melting point of the finally obtainable polyester resin tends to be low, such being undesirable. The value calculated by the above formula at the esterification rate of 60% is more preferably at most 4, particularly preferably at most 2. Further, if T0 and Tp being the mol% of the trans form in the 1,4-cyclohexane dicarboxylic acid units in the polyester resin, do not satisfy (exceed the upper limit of) the following formula (I) i.e. $0 \leqq \{(T0-Tp)/T0\} \times 100 \leqq 12$, the melting point of the finally obtainable polyester resin likewise tends to be low, such being undesirable.

T0 being the mol% of the trans form in the starting material 1,4-CHDA can be measured by a liquid chromatography method. Whereas, for the esterification rate of the oligomer, firstly, the amount of free carboxylic acid terminal groups (AV) of the oligomer is quantified in accordance with a prescribed method, then the total amount of carboxylic acid-derived groups (SV) of the oligomer is quantified in accordance with a prescribed method, and the esterification rate can be calculated by the following formula i.e. esterification rate (%) = $\{(SV-AV)/SV\} \times 100$. Further, also T60 at the esterification rate of 60% can be measured by a liquid chromatography method. The mol% (Tp) of the trans form units in the 1,4-cyclohexane dicarboxylic acid units in the polyester resin can be quantified by a nuclear magnetic resonance spectrophotometry.

The intrinsic viscosity of the polyester resin according to the present invention is preferably within a range of from 0.6 to 1.5 dl/g. If the intrinsic viscosity is less than 0.6 dl/g, the mechanical strength of the polyester resin may sometimes be inadequate, and if it exceeds 1.5 dl/g, the fluidity tends to be low, and the moldability may sometimes be poor, either case being undesirable. A more preferred range of the intrinsic viscosity is from 0.7 to 1.4 dl/g.

The polyester resin according to the present invention may be used by itself or as mixed with other thermoplastic resins, and further, various resin additives other than the above-mentioned compounds may be incorporated within a range not to impair the purpose or effects of the present invention. For example, the resin additives include an inorganic filler such as glass beads, glass powder, glass balloons, mica, talc or calcium carbonate, an antioxidant, a thermal stabilizer, an ultraviolet absorber, a neutralizing agent, a lubricant, a compatibilizing agent, an anti-fogging agent, an anti-blocking agent, a plasticizer, a fluororesin powder, a slipping agent, a dispersant, a coloring agent, an antiseptic, a fluorescent brightener and an anti-rusting agent.

Other thermoplastic resins which may be mixed to the polyester resin of the present invention may, for example, be a polyester resin different in the composition from the above polyester resin, such as polyethylene terephthalate or polybutylene terephthalate, a polyamide resin, a polycarbonate, an ABS resin, a polymethyl methacrylate, a polyamide elastomer and a polyester elastomer. The polyester resin of the present invention or a resin composition having other thermoplastic resins mixed thereto, may be formed into various products by an extrusion method, an injection molding method, an extrusion blow molding method or a calendering method.

The obtained pelletized polyester resin may be further subjected to solid phase polymerization to have a higher intrinsic viscosity, as the case requires.

EXAMPLES

Now, the present invention will be described in further detail with reference to Examples. However, it should be understood that the present invention is by no means restricted to such specific Examples.

Now, methods for measuring various physical properties in the following Examples and Comparative Examples will be shown as follows.

QUANTITATIVE ANALYSIS OF TRANS FORM IN MONOMER CHDA

In a 50 ml measuring flask, 0.2 g of CHDA was dissolved with 1.2 ml of 4N sodium hydroxide. Further, 40 ml of pure water was added, and the pH was adjusted to 5 with 200 $\mu$l of phosphoric acid. Then, pure water was added to bring the volume to 50 ml. This solution was measured by liquid chromatography under the following conditions.

Apparatus: LC-10AD, manufactured by Shimadzu Corporation

Column: J'sphere ODS-H80 4.6 mm $\times$ 250
Temperature: 500°C
Mobile phase: AcN/H$_2$O/H$_3$PO$_4$=200/800/4
Flow rate: 0.6 ml/min
Detector: UV (210 nm)
Injected amount: 20 $\mu$l

From the respective peak areas, the proportions of the trans form and the cis form were obtained. QUANTITATIVE ANALYSES OF DICARBOXYLIC ACID UNITS AND DIOL UNITS IN POLYMER, AND QUANTITATIVE ANALYSES OF TRANS FORM AND CIS FORM OF CHDA AND CHDM

Using deuterated chloroform as a solvent, a polyester resin was dissolved, and using 1H-NMR (GSX-400), manufactured by Nippon Denshi K.K., dicarboxylic acid units and diol units in the polymer were quantified, and further, quantitative analyses of the trans form and the cis form in the CHDA component and CHDM component were carried out.

MEASUREMENT OF MELTING POINT OF POLYMER

The melting point of a polymer was measured in accordance with JIS K7121 by means of DSC220 (differential scanning calorimeter) manufactured by SEIKO CORPORATION. About 10 mg of the polymer was put into aluminum pan manufactured by SEIKO CORPORATION, sealed, heated from room temperature to 300°C at a temperature raising rate of 20°C/min, maintained at 300°C for 3 minutes and then cooled to room temperature at a rate of 20°C/min. Further, after being held for 3 minutes, it was heated from room temperature to 300°C at 20°C/min. The melting point Tm of the polymer was taken as the value at the time of the temperature raise for the second time. The Tm value was the temperature at the maximum portion of the peak.

INTRINSIC VISCOSITY

Using 0.5 g of a polyester resin sample and a mixed liquid of phenol/tetrachloroethane (weight ratio: 1/1) as a solvent, a solution having a concentration (c) of 1.0 g/dl was prepared. In a case where the sample was a melt polycondensation resin, it was dissolved by heating it at 110°C and holding it for 30 minutes. At 30°C of this solution, the relative viscosity ($\eta$rel) to the solvent only (c=0) was measured by means of a Ubbelohde viscometer, and from this relative viscosity ($\eta$rel), 1 was reduced to obtain a specific viscosity ($\eta$sp), whereupon the ratio ($\eta$sp/sc) to the concentration (c) was obtained. In the same manner, by changing the concentration (c) to 0.5 g/dl, 0.2 g/dl and 0.1 g/dl, the respective ratios ($\eta$sp/c) were obtained, and from these values, a ratio ($\eta$sp/c) obtained by extrapolating 0 for the concentration (c) was obtained as the intrinsic viscosity [$\eta$] (dl/g).

EXAMPLE 1-1

Into a reactor equipped with a stirrer, a distillation tube and a vacuuming device, 92.12 g of 1,4-CHDA (trans/cis=98/2), 79.07 g of 1,4-CHDM (charged molar ratio of CHDM/CHDA: 102.5/100) and 0.54 g (0.31 mmol) of an aqueous solution containing 10 wt% of tetraethylammonium hydride were charged and heated to 150°C in an oil bath in a nitrogen stream and then heated to 200°C over a period of 1 hour, and then held at 200°C for 1 hour to carry out an esterification reaction. Then, 0.88 g (0.155 mmol) of a n-butanol solution containing 6 wt% of tetra n-butyl titanate was added to the reactor, and while the inner temperature was raised from 200°C to 250°C over a period of 45 minutes, the pressure in the reactor was gradually reduced to carry out a polycondensation reaction. After the reaction for 2.5 hours while maintaining the absolute pressure in the reactor at 0.1 kPa and the temperature at 250°C, the obtained polyester resin was withdrawn in the form of a strand into water and pelletized. The intrinsic viscosity, melting point and trans/cis ratio in the 1,4-CHDA component of the obtained polyester resin are shown in Table 1-1.

EXAMPLE 1-2

A polycondensation reaction was carried out under the same conditions as in Example 1-1 except that the aqueous solution containing 10 wt% of tetraethylammonium hydride was changed to 64 mg (0.078 mmol) of an aqueous solution containing 10 wt% of sodium acetate. The intrinsic viscosity, melting point and trans/cis ratio in the 1,4-CHDA component of the obtained polyester resin are shown in Table 1-1.

EXAMPLE 1-3

A polycondensation reaction was carried out under the same conditions as in Example 1-1 except that the aqueous solution containing 10 wt% of tetraethylammonium hydride was changed to 77 mg (0.078 mmol) of an aqueous solution containing 10 wt% of potassium acetate. The intrinsic viscosity, melting point and trans/cis ratio in the 1,4-CHDA component of the obtained polyester resin are shown in Table 1-1.

EXAMPLE 1-4

A polycondensation reaction was carried out under the same conditions as in Example 1-1 except that the aqueous solution containing 10 wt% of tetraethylammonium hydride was changed to 170 mg (0.078 mmol) of an aqueous solution containing 10 wt% of magnesium acetate. The intrinsic viscosity, melting point and trans/cis ratio in the 1,4-CHDA component of the obtained polyester resin are shown in Table 1-1.

EXAMPLE 1-5

A polycondensation reaction was carried out under the same conditions as in Example 1-1 except that at the time of the polycondensation reaction, together with 0.88 g (0.155 mmol) of a n-butanol solution containing 6 wt% of tetra n-butyl titanate, 64 mg (0.078 mmol) of an aqueous solution containing 10 wt% of sodium acetate was added to the reactor. The intrinsic viscosity, melting point and trans/cis ratio in the 1,4-CHDA component of the obtained polyester resin are shown in Table 1-1.

COMPARATIVE EXAMPLE 1-1

A polycondensation reaction was carried out under the same conditions as in Example 1-1 except that no aqueous solution containing 10 wt% of tetraethylammonium hydride was used. The intrinsic viscosity, melting point and trans/cis ratio in the 1,4-CHDA component of the obtained polyester resin are shown in Table 1-1.

TABLE 1-1

|  | Example 1-1 (Et4NOH) | Example 1-2 (NaAc) | Example 1-3 (KOAc) | Example 1-4 (Mg(OAc)$_2$) | Example 1-5 (Et4NOH+NaOAc) | Comparative Example 1-1 (Nil) |
|---|---|---|---|---|---|---|
| Basic compound/Ti molar ratio | 2.0 | 0.5 | 0.5 | 1.0 | 2.5 | 0 |
| Intrinsic viscosity | 0.963 | 0.993 | 0.825 | 0.893 | 0.88 | 0.96 |
| Tm/°C | 228 | 229 | 225 | 228 | 230 | 215 |
| Trans/cis | 92.5/7.5 | 93/7 | 91.4/8.6 | 92.5/7.5 | 93.5/6.5 | 87.7/13.3 |

The polyester resins obtained in Examples 1-1 to 1-5 employing a basic compound for the esterification reaction in accordance with the process of the present invention had a high melting point of at least 225°C and also had a high trans ratio of at least 90/10 in the trans/cis ratio in the 1,4-CHDA units. On the other hand, in Comparative Example 1-1 wherein no basic compound was employed in the esterification reaction and the polycondensation reaction, only a polyester resin having a low melting point and a low trans/cis ratio was obtained.

In the following Examples and Comparative Examples, T0 (%) being the mol% of the trans form in the starting material 1,4-cyclohexane dicarboxylic acid (1,4-CHDA), Tp (%) being the mol% of the trans (t) form units in the 1,4-cyclohexane dicarboxylic acid units in the obtainable polyester resin, T60 (%) being the isomerization rate at the esterification rate of 60%, the esterification rate of the oligomer and the melting point of the polyester resin, are ones measured by the following methods.

(1) Quantitative analysis of the trans form (t) (T0) (unit: mol%) in the 1,4-CHDA: 0.2 g of 1,4-CHDA was put into a measuring flask having a capacity of 50 ml and dissolved in 1.2 ml of 4N sodium hydroxide. 40 ml of pure water was added thereto, and the pH was adjusted to 5 with 200 $\mu$l of phosphoric acid. Then, pure water was added to 50 ml. This sample was measured by liquid chromatography (model: LC-10AD, manufactured by Shimadzu Corporation). The apparatus was operated in accordance with a prescribed method, and the proportions of the trans from (t) and cis form (c) were calculated from the peak areas of the respective components. The measuring conditions were as follows.
Column: J'sphere ODS-H80 4.6 mm × 250
Temperature: 50°C, mobile phase:
acetonitrile/water/phosphoric acid
Flow rate/ 0.6 ml/min, detector: UV (210 nm), injected amount: 20 $\mu$l
(2) Measurement of the esterification rate (unit: %) of the oligomer: Firstly, the amount of free carboxylic acid terminal groups (AV) of the oligomer was quantified in accordance with the method disclosed in the following (2-1), then, the amount of total carboxylic acid-derived groups (SV) of the oligomer was quantified by the method disclosed in the following (2-2), and the esterification rate was calculated by the following formula i.e. esterification rate (%)={(SV-AV)/SV}×100.

(2-1) Quantitative analysis of the amount of free carboxylic acid terminal groups (AV): Into a test tube, 10 mg of an oligomer was put, 25 ml of benzyl alcohol was added, and while the content was stirred by a magnetic stirrer, the test tube was immersed in an oil bath having the temperature adjusted to 195±3°C to dissolve the oligomer in benzyl alcohol. The obtained solution was left to cool to room temperature, and 2 ml of ethyl alcohol was gradually added. The obtained solution was titrated with a 0.01N sodium hydroxide benzyl alcohol solution by an automatic titrating device (model: AUT-501, manufactured DKK-TOA CORPORATION) using a composite pH electrode. Here, the 0.01N sodium hydroxide benzyl alcohol solution was prepared and evaluated in accordance with JIS K8006 to calculate the factor. From the inflection point of the obtained titration curve, the titer was obtained, and AV was calculated from the following formula i.e. AV={(A-B)×0.01N×F}/W. In this formula, AV is the amount (meq/g) of free carboxylic acid terminal groups of the oligomer, A is the measured titer (ml), B is the blank titer (ml), F is the titer of the 0.01N sodium hydroxide benzyl alcohol solution, and W is the weight (g) of the oligomer.
(2-2) Quantitative analysis of the amount of total carboxylic acid-derived groups (SV) of oligomer: 0.3 g of a sample oligomer pulverized in a mortar was accurately weighed and put into an Erlenmeyer flask having a capacity of 50 ml. 20 ml of a 0.5N potassium hydroxide/ethanol solution was added thereto by a whole pipette, then 10 ml of pure water was added, and a reflux condenser was set. On a hot plate having the surface temperature adjusted to 200°C, heat refluxing was carried out for 2 hours with occasional stirring to hydrolyze the sample. The obtained sample solution was transparent. After cooling, it was titrated with a 0.5N hydrochloric acid aqueous solution using phenolphthalein as an indicator. Here, the 0.5N potassium hydroxide/ethanol solution and the 0.5N hydrochloric acid aqueous solution were prepared and evaluated in accordance with JIS K8006. The indicator was the one prepared by dissolving 1 g of phenolphthalein in 90 ml of ethanol, and pure water was added to 100 ml. SV was calculated by the following formula i.e. SV={(Vb-Vs)×f×(1/2)}/W. In this formula, SV is the amount (meq/g) of total carboxylic acid-derived groups of the oligomer, Vs is the titer (ml) of the sample, Vb is the titer of the blank, f is the factor of the 0.5N hydrochloric acid aqueous solution, and W is the weight (g) of the oligomer.

(3) Quantitative analysis of trans form (t) units (unit: mol%) in 1,4-CHDA in reaction product or oligomer: 0.1 g of the reaction product or oligomer was put into an Erlenmeyer flask having a capacity of 50 ml, 10 ml of 0.5 mol/l ethanolic potassium hydroxide was added thereto, and the Erlenmeyer flask was immersed and shaked in an oil bath adjusted to a temperature of from 80 to 90°C to have the reaction product or oligomer dissolved. The obtained solution was transferred to a measuring flask having a capacity of 50 ml, and pure water and phosphoric acid were added thereto to adjust the pH to 6, and then, pure water was added to 50 ml. This sample was measured by liquid chromatography (model: LC-10AD, manufactured by Shimadzu Corporation). The measuring conditions were the same as the conditions in the above (1).

(4) Quantitative analysis of the trans form (t) and the cis form (c) of 1,4-CHDA in polyester resin: Using deuterated chloroform as a solvent, a polyester resin was dissolved therein, and using a nuclear resonance spectrophotometer (model: GSX-400, manufactured by JEOL Ltd.), the trans form (t) and the cis form (c) in the polyester resin were quantified in accordance with a prescribed method.

(5) Intrinsic viscosity: Phenol and tetrachloroethane were added in an weight ratio of 1:1 to obtain a mixed solvent, and a sample polyester resin was accurately weighed and dissolved in this mixed solvent to obtain a 1.0 g/dl solution, and the intrinsic viscosity was measured at a temperature of 30°C by a Ubbelohde viscometer.

(6) Melting point (Tm) (unit: °C): Measured in accordance with JIS K7121.

EXAMPLE 2-1

Into a stainless steel reactor having a capacity of 200 ml and equipped with a stirrer, a reflux condenser, a heating device, a pressure meter, a thermometer and a vacuuming device, 92.12 g of 1,4-CHDA (trans/cis molar ratio=98/2), 79.07 g of 1,4-CHDM (trans/cis molar ratio=70/30) (molar ratio of 1,4-CHDA to 1,4-CHDM: 1/1.025) and 0.88 g of a butanol solution containing 6 wt% of tetra-n-butyl titanate (catalyst) were charged, and the interior of the reactor was flashed with nitrogen gas. While the interior of the reactor was sealed with nitrogen gas, the internal temperature was raised from room temperature to 150°C in an oil bath, then raised from 150°C to 180°C in 30 minutes and further maintained at 180°C for 2 hours to carry out the esterification reaction.

At the time when the internal temperature reached 180°C and every 15 minutes thereafter, the reaction solution was sampled from the reactor, and with respect to the collected samples, the esterification rate and the molar ratio of the trans form (t)/the cis form (c) in the 1,4-CHDA units in the oligomer were measured, and a relation curve between the esterification rate of the trans/cis molar ratio was drawn. From this relation curve, the molar ratio of the trans form/the cis form at the esterification rate of 60% was read out, and from this molar ratio and the molar ratio (98/2) of the trans form/the cis form at the esterification rate of 0%, the isomerization rate was calculated. The esterification rate after carrying out the esterification reaction for 2 hours at a temperature of 180°C was 60%. Then, the polycondensation reaction was carried out while the internal temperature was raised from 180°C to 250°C over a period of 2 hours and the internal pressure of the reactor was reduced. The polycondensation reaction was completed after maintaining the reaction temperature at 250°C for 2 hours and the inner pressure of the reactor at an absolute pressure of 0.1 kPa. After completion of the polycondensation reaction, the obtained resin was withdrawn in the form of a strand in water and cut to obtain pellets.

The ratio of the tarns form to the cis form of 1,4-CHDA, the temperature and time conditions during the esterification reaction, the reaction temperature at the esterification rate of 60%, the esterification rate, the ratio of the trans form to the cis form of 1,4-CHDA units in the oligomer at the esterification rate of 60%, the value (T60) of the formula (I), the esterification rate of the oligomer at the completion of the esterification reaction, the temperature and time conditions during the polycondensation reaction, the ratio of the trans form to the cis form of 1,4-CHDA units in the polyester resin, the value (Tp) of the formula (II), the intrinsic viscosity, the melting point (Tm), etc. were measured by the above-mentioned methods and presented in Table 2-1.

EXAMPLE 2-2

Into the same reactor as used in Example 2-1, the starting material 1,4-CHDA and 1,4-CHDM, and the catalyst were charged in the same amounts as in Example 2-1, and the interior of the reactor was flashed with nitrogen gas. While the interior of the reactor was sealed with nitrogen gas, the internal temperature was raised from room temperature to 150°C in an oil bath and then raised from 150°C to 180°C in 30 minutes. After maintaining the temperature at 180°C for 2 hours, the temperature was further raised from 180°C to 215°C over a period of 1 hour to carry out an esterification reaction to obtain an oligomer. The esterification rate at that time was 85%. Then, a polycondensation reaction was carried out while the internal temperature was raised from 215°C to 250°C over a period of 30 minutes, and the internal pressure of the reactor was reduced. The polycondensation reaction was completed after maintaining the reaction temperature at 250°C for 2 hours and the internal pressure of the reactor at an absolute pressure of 0.1 kPa. After completion of the polycondensation reaction, the obtained resin was withdrawn in the from of a strand in water and cut to obtain pellets. With respect to the oligomer, the polyester resin, etc., measurements were carried out in the same manner as in Example 2-1, and the results are shown in Table 2-1.

EXAMPLE 2-3

In the same reactor as used in Example 2-1, the starting material 1,4-CHDA and 1,4-CHDM and the catalyst were charged in the same amounts as in Example 2-1, and the interior of the reactor was flashed with nitrogen gas. While the interior of the reactor was sealed with nitrogen gas, the internal temperature was raised from room temperature to 150°C in an oil bath, and then raised from 150°C to 200°C in 30 minutes. The temperature was maintained at 200°C for 1 hour to carry out an esterification reaction to obtain an oligomer. The esterification rate at that time was 80%. Then, a polycondensation reaction was carried out while the internal temperature was raised from 200°C to 250°C over a period of 45 minutes, and the internal pressure of the reactor was reduced. The polycondensation reaction was completed after maintaining the reaction temperature at 250°C for 2 hours and the internal temperature of the reactor at a absolute pressure of 0.1 kPa. After completion of the polycondensation reaction, the obtained resin was withdrawn in the form of a strand in water and cut to obtain pellets. With respect to the oligomer, polyester resin, etc., measurements were carried out in the same manner as in Example 2-1, and the results are shown in Table 2-1.

EXAMPLE 2-4

The esterification reaction and polycondensation reaction were carried out in the same manner as in Example 2-1 except that in the same Example, 0.54 g of the aqueous solution containing 10% of tetraethylammonium was charged into the reactor in the esterification reaction stage. After completion of the polycondensation reaction, the obtained resin was withdrawn in the form of a strand in water and cut to obtain pellets. With respect to the oligomer, polyester resin, etc., measurements were carried out in the same manner as in Example 2-1, and the results are shown in Table 2-1.

COMPARATIVE EXAMPLE 2-1

Into the same reactor as used in Example 2-1, the starting material 1,4-CHDA and 1,4-CHDM, and the catalyst were charged in the same amounts as in Example 2-1, and the interior of the reactor was flashed with nitrogen gas. While the interior of the reactor was sealed with nitrogen gas, the internal temperature was raised from room temperature to 150°C in an oil bath and then raised from 150°C to 220°C in 30 minutes. The temperature was maintained at 220°C for 1 hour to carry out an esterification reaction to obtain an oligomer. Then, a polycondensation reaction was carried out while the internal temperature was raised from 220°C to 250°C over a period of 30 minutes, and the internal pressure of the reactor was reduced. The polycondensation reaction was completed after maintaining the reaction temperature at 250°C for 2 hours and the internal pressure of the reactor at an absolute pressure of 0.1 kPa. After completion of the polycondensation reaction, the obtained resin was withdrawn in the from of a strand in water and cut to obtain pellets. With respect to the oligomer, polyester resin, etc., measurements were carried out in the same manner as in Example 2-1, and the results are shown in Table 2-1.

COMPARATIVE EXAMPLE 2-2

Into the same reactor as used in Example 2-1, the starting material 1,4-CHDA and 1,4-CHDM, and the catalyst were charged in the same amounts as in Example 2-1, and the interior of the reactor was flashed with nitrogen gas. While the interior of the reactor was sealed with nitrogen gas, the internal temperature was raised from room temperature to 150°C in an oil bath and then raised from 150°C to 200°C in 30 minutes. The temperature was maintained at 200°C for 4 hours to carry out an esterification reaction to obtain an oligomer. Then, a polycondensation reaction was carried out while the internal temperature was raised from 200°C to 270°C over a period of 30 minutes, and the internal pressure of the reactor was reduced. The polycondensation reaction was completed after maintaining the reaction temperature at 270°C for 2 hours and the internal pressure of the reactor at an absolute pressure of 0.1 kPa. After completion of the polycondensation reaction, the obtained resin was withdrawn in the from of a strand in water and cut to obtain pellets. With respect to the oligomer, polyester resin, etc., measurements were carried out in the same manner as in Example 2-1, and the results are shown in Table 2-1.

TABLE 2-1

| No. Item | Example 2-1 | Example 2-2 | Example 2-3 | Example 2-4 | Comparative Example 2-1 | Comparative Example 2-2 |
|---|---|---|---|---|---|---|
| Esterification reaction | | | | | | |
| Molar ratio of CHDA/CHDM | 1/1.025 | 1/1.025 | 1/1.025 | 1/1.025 | 1/1.025 | 1/1.025 |
| t/c ratio of CHDA (T0) | 98/2 | 98/2 | 98/2 | 98/2 | 98/2 | 98/2 |
| Reaction temperature *1 | 150°C ↓ 30 min 180°C | 150°C ↓ 30 min 180°C | 150°C ↓ 30 min 200°C | 150°C ↓ 30 min 180°C | 150°C ↓ 30 min 220°C | 150°C ↓ 30 min 200°C |
| | Maintained at 180°C for 2 hr | Maintained at 180°C for 2 hr | Maintained at 200°C for 1 hr | Maintained at 180°C for 2 hr | Maintained at 220°C for 1 hr | Maintained at 200°C for 4 hr |
| | | 180°C ↓ 1 hr 215°C | | | | |
| Reaction temperature *2 | 180°C | 180°C | 185°C | 180°C | 200°C | 185°C |
| t/c ratio in oligomer *3 | 97/3 | 97/3 | 94/6 | 97.5/2.5 | 91/9 | 96/4 |
| Value of the formula (II) | 1.02 | 1.02 | 4.08 | 0.51 | 7.14 | 5.08 |
| Esterification rate *4 | 62 | 85 | 80 | 60 | 88 | 95 |

TABLE 2-1 (continued)

| No. Item | Example 2-1 | Example 2-2 | Example 2-3 | Example 2-4 | Comparative Example 2-1 | Comparative Example 2-2 |
|---|---|---|---|---|---|---|
| Polycondensation reaction | | | | | | |
| Reaction temperature *1 | 180°C ↓ 2 hr 250°C | 215°C ↓ 30 min 250°C | 200°C ↓ 45 min 250°C | 180°C ↓ 2 hr 250°C | 220°C ↓ 30 min 250°C | 200°C ↓ 30 min 270°C |
| | Maintained at 250°C for 2 hr | Maintained at 250°C for 2 hr | Maintained at 250°C for 2 hr | Maintained at 250°C for 2 hr | Maintained at 250°C for 2 hr | Maintained at 270°C for 2 hr |
| Polyester resin | | | | | | |
| t/c ratio in polyester resin *5 | 94/6 | 93/7 | 90/10 | 95/5 | 86/14 | 82/18 |
| Value of the formula (I) | 4.08 | 5.10 | 6.12 | 3.06 | 12.24 | 16.32 |
| Intrinsic viscosity | 0.973 | 0.993 | 0.960 | 0.988 | 0.96 | 0.75 |
| Melting point (Tm) | 230 | 229 | 220 | 231 | 219 | 199 |

Notes:
*1. The reaction temperature means the temperature and the temperature raising time, and the retention time.
*2. means the reaction temperature at the time when the esterification rate reached 60%.
*3. means the molar ratio of the trans form (t) to the cis form (c) in 1,4-cyclohexane dicarboxylic acid (CHDA) units contained in the oligomer at the time when the esterification rate was 60%.
*4. means the esterification rate at the completion of the esterification reaction.

EP 1 746 120 A1

From Table 2-1, the following is evident.

1. With respect to the polyester resins in Examples 2-1 to 2-5 of the present invention, the value calculated by the above formula (I) (isomerization rate) is not more than 12, thus satisfying the requirement of Claim 1, and the melting point is at least 220°C, thus being excellent in heat resistance.

2. With respect to the polyester resins in Examples 2-1 to 2-4 of the present invention, the value calculated by the above formula (II) (isomerization rate of oligomer) satisfies the requirement of Claim 3, and the melting point is at least 220°C, thus being excellent in heat resistance.

3. In a case where a basic compound is added to the reaction system in the polyester reaction step, the value calculated by the above formula (II) (isomerization rate of oligomer) is 0.51, the value calculated by the above formula (I) (isomerization rate) is low at 3.06, and the melting point of the polyester resin is particularly high at 231°C (see Example 2-4).

4. On the other hand, with respect to the polyester resins in Comparative Examples 1 and 2, the value calculated by the above formula (II) (isomerization rate of oligomer) is at least 5, and the value calculated by the above formula (I) (isomerization rate) exceeds 12, and the melting point is low.

INDUSTRIAL APPLICABILITY

The polyester resin of the present invention is useful as a starting material resin for producing various products for which thermal resistance is required, by an extrusion method, an injection molding method, an extrusion blow molding method or a calendering method. As the products, hollow molded products, tubular products, plate products, sheets, films, monofilaments, tying bands, containers to accommodate food products, pharmaceutical products or cosmetic products as well as automobile components, office appliance components or household electric components, may, for example, be mentioned. It is particularly useful as a starting material for producing automobile components which will be frequently in contact with moisture at high temperatures.

The entire disclosures of Japanese Patent Application No. 2004-140759 filed on May 11, 2004 and Japanese Patent Application No. 2004-181683 filed on June 18, 2004 including specifications, claims and summaries are incorporated herein by reference in their entireties.

**Claims**

1. A polyester resin which is a polyester resin obtainable by preparing an oligomer by an esterification reaction of a dicarboxylic acid component containing 1,4-cyclohexane dicarboxylic acid as the main component, with a diol component, and polycondensing this oligomer in the presence of a polycondensation catalyst, wherein $T0$ and $Tp$ satisfy the following formula (I):

$$0 \leq \{(T0-Tp)/T0\} \times 100 \leq 12 \qquad (I)$$

where $T0$ is the mol% of the trans form in the 1,4-cyclohexane dicarboxylic acid contained in the starting material, and $Tp$ is the mol% of the trans form in the 1,4-cyclohexane dicarboxylic acid units contained in the obtainable polyester resin.

2. The polyester resin according to Claim 1, wherein the mol% ($Tp$) of the trans form in the 1,4-cyclohexane dicarboxylic acid units contained in the polyester resin is at least 80 mol%.

3. A process for producing a polyester resin, which comprises a step of preparing an oligomer by an esterification reaction of a dicarboxylic acid component containing 1,4-cyclohexane dicarboxylic acid as the main component, with a diol component, and a step of polycondensing this oligomer in the presence of a polycondensation catalyst, wherein $T0$, $T60$ and $Tp$ satisfy the following formula (II), and $T0$ and $Tp$ of the obtainable polyester resin satisfy the following formula (I) :

$$0 \leq \{(T0-Tp)/T0\} \times 100 \leq 12 \qquad (I)$$

$$0 \leq \{(T0-T60)/T0\} \times 100 \leq 5 \qquad (II)$$

where T0 is the mol% of the trans form in the 1,4-cyclohexane dicarboxylic acid contained in the starting material, Tp is the mol% of the trans form in the 1,4-cyclohexane dicarboxylic acid units contained in the obtainable polyester, and T60 is the mol% of the trans form in the 1,4-cyclohexane dicarboxylic acid units at an esterification rate of 60%.

4. A process for producing a polyester resin, which comprises a step of preparing an oligomer by an esterification reaction of a dicarboxylic acid component containing 1,4-cyclohexane dicarboxylic acid as the main component, with a diol component, and a step of polycondensing this oligomer in the presence of a polycondensation catalyst, wherein the esterification reaction is carried out at a temperature of not higher than 220°C while the temperature is gradually raised, and a step until the esterification rate reaches 60%, is carried out within a temperature range of not higher than 185°C,

5. The process for producing a polyester resin according to Claim 3, wherein the esterification reaction is carried out at a temperature of not higher than 220°C while the temperature is gradually raised, and a step until the esterification rate reaches 60%, is carried out within a temperature range of not higher than 185°C.

6. A process for producing a polyester resin, which comprises an esterification reaction of a dicarboxylic acid component containing 1,4-cyclohexane dicarboxylic acid as the main component, with a diol component, and a polycondensation reaction, wherein the esterification reaction is carried out by means of a basic compound, and then, the polycondensation reaction is carried out by means of a polycondensation catalyst.

7. The process for producing a polyester resin according to any one of Claims 3 to 5, wherein a basic compound is used when the esterification reaction is carried out.

8. The process for producing a polyester resin according to Claim 6 or 7, wherein the basic compound is at least one compound selected from the group consisting of an alkali metal carboxylate, an alkaline earth metal carboxylate, an organic amine and an organic ammonium compound.

9. The process for producing a polyester resin according to any one of Claims 6 to 8, wherein the ratio of the acid-base equivalent of the basic compound to the mol equivalent of the polycondensation catalyst is at least 0.1 and at most 10.

10. The process for producing a polyester resin according to any one of Claims 3 to 9, wherein the polycondensation reaction is carried out within a temperature range of from 180 to 250°C under reduced pressure.

11. The process for producing a polyester resin according to any one of Claims 3 to 10, wherein the polycondensation catalyst is a metal compound containing at least one metal element selected from the group consisting of titanium, germanium, antimony, aluminum, nickel, zinc, tin, cobalt, rhodium, iridium, zirconium, hafnium, lithium, calcium and magnesium.

12. The process for producing a polyester resin according to any one of Claims 3 to 11, wherein the diol component is a diol containing 1,4-cyclohexane dimethanol.

13. The process for producing a polyester resin according to any one of Claims 3 to 12, wherein trans-1,4-cyclohexane dicarboxylic acid units in the 1,4-cyclohexane dicaboxylic acid units contained in the polyester resin are at least 80 mol%.

## INTERNATIONAL SEARCH REPORT

| | International application No. |
|---|---|
| | PCT/JP2005/008631 |

**A. CLASSIFICATION OF SUBJECT MATTER**
Int.Cl$^7$  C08G63/18, 63/78

According to International Patent Classification (IPC) or to both national classification and IPC

**B. FIELDS SEARCHED**

Minimum documentation searched (classification system followed by classification symbols)
Int.Cl$^7$  C08G63/00-63/91

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 02/31020 A2  (EASTMAN CHEMICAL CO.),<br>18 April, 2002 (18.04.02),<br>Claim 1; page 1, lines 14 to 20<br>& JP 2004-511594 A<br>Claims 1; Par. No. [0001]<br>& US 2002/132963 A1      & EP 1325055 A1 | 1,2<br>3-13 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 May, 2005 (25.05.05) | 14 June, 2005 (14.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000290356 A
- US 2901466 A
- US 2003232958 A

- US 6084055 A
- JP 2004140759 A
- JP 2004181683 A